# EUROPÄISCHE PATENTSCHRIFT

(11) **EP 0 890 494 B1**
(45) Veröffentlichungstag und Bekanntmachung des Hinweises auf die Patenterteilung: **08.10.2003**
(21) Anmeldenummer: 98115263.0
(22) Anmeldetag: 28.05.1997
(51) Int. Cl.: F15B 1/04, B60T 13/14, F16L 55/045

(54) **Druckspeicher**
Accumulator
Accumulateur

(30) Priorität: 30.05.1996 DE 19621786
(43) Veröffentlichungstag der Anmeldung: 13.01.1999
(62) Teilanmeldung aus: 97927069.1
(73) Patentinhaber: Lucas Industries Limited, West Midlands B90 4LA (GB)
(72) Erfinder: Mohr, Kurt, 56283 Halsenbach/Ehr (DE); Wörsdörfer, Karl-Friedrich, 55257 Budenheim (DE); Poertzgen, Gregor, 56068 Koblenz (DE)
(74) Vertreter: Schmidt, Steffen J., Dipl.-Ing.

(56) Entgegenhaltungen:
- DE-A- 3 807 316
- DE-A- 4 202 905
- GB-A- 2 104 595
- US-A- 1 830 869
- US-A- 4 813 477

## Beschreibung

Die vorliegende Erfindung betrifft einen Druckspeicher mit einem Gehäuse, welches einen Behälter für Fluid bildet, einem Fluidanschluß für in das Gehäuse ein- oder ausströmendes Fluid, sowie eine Federanordnung, gegen deren Kraft durch den Fluidanschluß einströmendes Bremsfluid arbeitet.

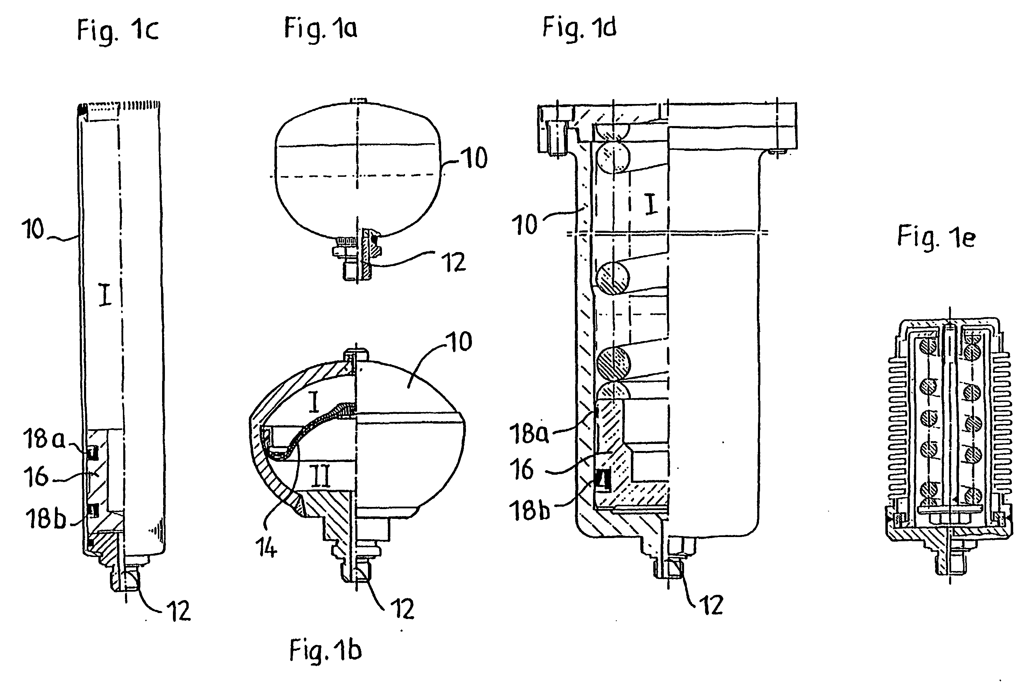

Im Stand der Technik sind Druckspeicher bekannt, die als Gaskolbenspeicher, als Gasmembranspeicher oder als Gas-Multilayer-Membranspeicher, oder als Federkolbenspeicher ausgestaltet sind. In den Fig. 1a, 1b, 1c und 1d sind jeweils schematisch derartige Druckspeicher veranschaulicht. Dabei ist in den Fig. 1a bis 1d gezeigten Varianten das Nutzvolumen bei 20 °C gleich. Ersichtlich schwankt die jeweilige Baugröße erheblich. Darüber hinaus bestehen für Druckspeicher mit Gasfüllung Probleme hinsichtlich der Temperaturabhängigkeit und der Dichtigkeit im Langzeitverhalten. Weitere Nachteile sind bei Gas-Multilayer-Membranspeichern das erhebliche Gewicht und die hohen Kosten. Bei Federkolbenspeichern besteht das Problem der Abnutzung der Dichtung zwischen dem Zylinder und dem Kolben.

Aus der amerikanischen Patentanmeldung US-A-1 830 869 ist ein Druckspeicher mit einem Gehäuse zur Aufnahme von Fluid bekannt, die eine Federanordnung aufweist, gegen deren Kraft das einströmende Fluid arbeitet. Diese Federanordnung besteht aus zwei Kammern, die aus Metall bestehen können. Innerhalb der ersten Kammer befindet sich die zweite Kammer, wobei das Fluid selbst nur in der ersten Kammer fließt. Um kein Fluid in die zweite Kammer einströmen zu lassen, befinden sich zwischen den Kammern jeweils Dichtungen. Da diese zweite Kammer keine Fluid aufnehmen kann, wird die Baugröße des gesamten Druckspeichers unnötig vergrößert.

Der Erfindung liegt die Aufgabe zugrunde einen Druckspeicher bereitzustellen, der diese Nachteile nicht aufweist.

Zur Lösung dieser Aufgabe ist zumindest ein Teil der Federanordnung durch wenigstens einen Teil der Wandung des Gehäuses gebildet und ein weiterer Teil der Federanordnung im Inneren des Gehäuses angeordnet. Dieser weitere Teil der Federanordnung ist als Schrauben-, Elastomer- oder Spiralfeder oder als Tellerfederpaket ausgebildet.

Auf diese Weise wird zum einen eine erhebliche Gewichtseinsparung erreicht. Andererseits ermöglicht die Integration zweier Funktionen (Speicherung potentieller Energie und Umschließung des Fluides) in einem Bauteil eine erhebliche Vereinfachung der Gesamtanordnung. Darüber hinaus werden Dichtungen vermieden, die aufgrund von Reibung verschleißen können.

Vorzugsweise ist der einen Teil der Gehäusewandung bildende Teil der Federanordnung zumindest abschnittsweise durch einen Faltenbalg, vorzugsweise aus Metall, gebildet.

Um ein möglichst hohes Druckniveau zu erreichen, wirkt parallel zu der durch einen Teil der Gehäusewandung gebildeten Federanordnung der weitere Teil der Federanordnung im Inneren des Gehäuses.

Weitere Vorteile, Eigenschaften und mögliche Abwandlungen werden anhand der nachstehenden Figurenbeschreibung deutlich.
- Fig. 1a - 1d: zeigen unterschiedliche Druckspeichervarianten gemäß dem Stand der Technik.
- Fig. le: zeigt eine Ausführungsform des erfindungsgemäßen Druckspeichers in maßstäblichem Größenvergleich zu den bekannten Anordnungen gemäß Fig. 1a - 1d.
- Fig. 2: zeigt einen erfindungsgemäßen Druckspeicher in vergrößerter schematischer Darstellung.

Fig. 1a zeigt einen Gasspeicher mit einem Gehäuse 10, das durch eine (nicht gezeigte) bewegliche Membran in zwei Räume geteilt ist. Ein erster vollständig umschlossener Raum I enthält unter Druck stehendes Gas. Ein zweiter Raum II ist durch einen Fluidanschluß mit unter Druck stehendem Fluid beaufschlagbar. Sobald der Druck des an dem Fluidanschluß 12 anstehenden Fluides höher ist als der Gasdruck in dem ersten, vollständig umschlossenen Raum I, wird die Membran verschoben, so daß sich dieser erste Raum I verringert und das Fluid in den zweiten Raum II eindringt.

Fig. 1b zeigt einen bekannten Druckspeicher, bei dem die Membran als Multilayer-Membrane 14 ausgestaltet ist. Allerdings ist diese Multilayer-Membran sehr teuer. Dennoch kann sie die Lebensdauer der Anordnung gegenüber einer Anordnung mit einfacher Membran allenfalls verdoppeln.

Die Probleme hinsichtlich der Temperaturabhängigkeit werden dabei nicht gelöst.

Fig. 1c zeigt einen Gaskolbenspeicher, bei dem in einem Zylinder, der gleichzeitig die Gehäusewand 10 bildet, ein Kolben 16 axial verschiebbar angeordnet ist. In gleicher Weise wie die Membran 14 verschließt der Kolben 16 einen mit unter Druck stehenden gasgefüllten Raum I. Die Problematik dieser Anordnung besteht darin, daß die Dichtungen 18a, 18b im Dauerbetrieb der Gefahr des Verschleißes und der Alterung unterliegen. Darüber hinaus besteht auch hier das Problem der Temperaturabhängigkeit aufgrund der Gasfüllung des ersten Raumes I.

Fig. 1d zeigt einen Federkolbenspeicher, bei dem anstelle der Gasfüllung im ersten Raum I eine Schraubenfeder 20 angeordnet ist, die auf dem Kolben 16 lastet. Damit ist zwar das Problem der Temperaturabhängigkeit gelöst. Allerdings besteht nach wie vor das Problem der Alterung und des Verschleißes der Dichtungen 18a, 18b.

Außerdem zeigen die Zeichnungen deutlich den erheblichen Raumbedarf beispielsweise des Federkolbens gemäß Fig. 1d im Vergleich zu dem Gasspeicher gemäß Fig. 1a.

Erstaunlicherweise ist es möglich durch die erfindungsgemä-Be Ausgestaltung einen Raumbedarf zu erreichen, der nur unwesentlich über dem Raumbedarf des Gasdruckspeichers gemäß Fig. 1a liegt, wobei jeweils gleiches Speichervolumen für Bremsfluid vorausgesetzt wird. Dies wird durch den maBstäblichen Größenvergleich zwischen den Fig. 1a bis 1d einerseits und Fig. le (erfindungsgemäßer Druckspeicher) andererseits veranschaulicht.

Dennoch ist der erfindungsgemäße Druckspeicher nicht (oder) kaum temperaturabhängig und hat aufgrund fehlender bewegter Dichtungen keine Verschleißprobleme.

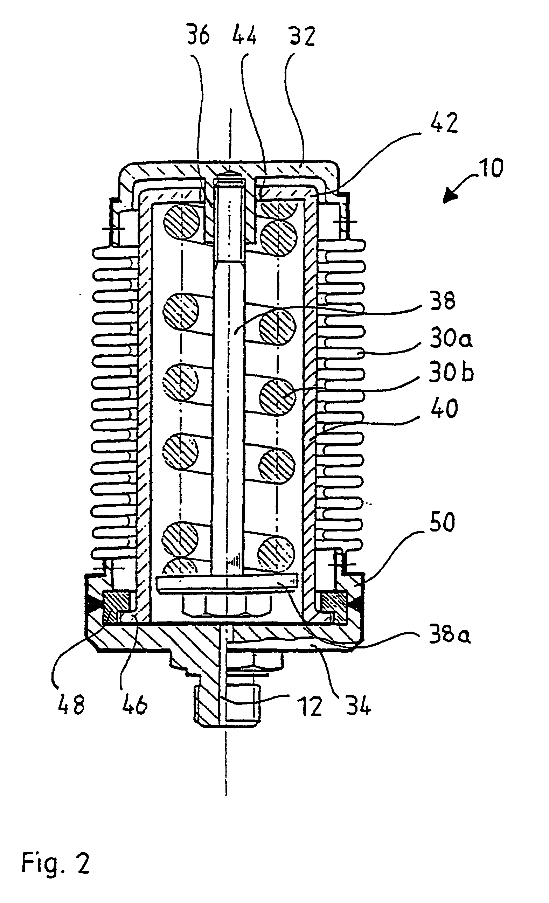

Fig. 2 zeigt eine Ausführungsform eines erfindungsgemäßen Druckspeichers mit einem Gehäuse 10 zur Aufnahme von Fluid, einem Fluidanschluß 12 für in das Gehäuse 10 ein- oder aus dem Gehäuse 10 ausströmendes Fluid sowie einer Federanordnung 30a, 30b, gegen deren Kraft durch den Fluidanschluß einströmendes Fluid arbeitet. Dabei ist ein Teil der Federanordnung 30a, 30b durch einen Teil der Gehäusewandung des Gehäuses 10 gebildet. Dieser, einen Teil der Gehäusewandung bildende Teil der Federanordnung 30a ist durch einen Metallfaltenbalg gebildet. Dazu wirkungsmäßig parallel geschaltet ist im Inneren des Gehäuses ein weiterer Teil der Federanordnung, nämlich die Schraubenfeder 30b vorgesehen.

Das Gehäuse 10 weist zwei starre Wandabschnitte 32, 34 auf, die im gezeigten Ausführungsbeispiel die Stirnseiten des zylindrischen Faltenbalges verschließen. Dabei ist in dem einen Wandabschnitt 34 der Fluidanschluß 12 vorgesehen.

Die beiden Wandabschnitte 32, 34 sind mit den beiden Enden des Metallfaltenbalges 30a fest und druckdicht verbunden, so daß sich ein insgesamt abgeschlossener Raum ergibt. Die erste starre Gehäusewand 32 weist an ihrer Innenseite einen Gewindeflansch 36 auf, in den ein Schraubbolzen 38 eingeschraubt ist. An der zweiten Gehäusewand stützt sich eine rohrförmige Hülse 40 ab, deren axiale Länge so bemessen ist, daß sie den gesamten Raum zwischen der ersten und der zweiten Gehäusewand 32, 34 im wesentlichen überdeckt. An ihrer der ersten Gehäusewand 32 zugewandten Seite weist die Hülse 40 einen als Zwischenwand 42 wirkenden Deckel auf, durch den der Gewindeflansch 26 unter Bildung eines Ringspaltes 44 ragt. Zwischen der Zwischenwand 42 und einem Kopf 38a des Schraubenbolzens 38 ist das Federelement 30b als Druckfeder unter Vorspannung aufgenommen. Durch den Schraubenbolzen 38 kann die Vorspannung des Federelementes 30 eingestellt werden.

Die Hülse 40 weist an ihrer der zweiten Gehäusewand 34 zugewandten Seite einen nach außen gewandten Ringbund 46 auf, der über einen Haltering 48 in dem umlaufenden Rand 50 des zweiten Gehäusedeckels 34 aufgenommen ist.

Zur Montage wird in eine vormontierte Einheit bestehend aus der ersten Gehäusewand 32 und dem Faltenbalg 30a die Hülse 40 (mit dem Haltering 48) eingeschoben und die Feder 30b eingesetzt. Mittels des Schraubenbolzens 38 wird die Feder 30b gegen die Zwischenwand 32 gepreßt. Anschließend wird der zweite Gehäusedeckel 34 mit dem Randelement 50 verschweißt, so daB diese eine feste und druckbelastbare Verbindung eingehen.

## Patentansprüche

1. Druckspeicher mit
- einem Gehäuse (10) zur Aufnahme von Fluid,
- einem Fluidanschluß (12) für in das Gehäuse (10) ein- oder ausströmendes Fluid, sowie
- einer Federanordnung (30a, 30b), gegen deren Kraft durch den Fluidanschluß (12) einströmendes Fluid arbeitet, wobei
- ein Teil der Federanordnung (30a) durch wenigstens einen Teil der Wandung des Gehäuses (10) gebildet ist,
**dadurch gekennzeichnet, dass** der andere Teil der Federanordnung (30b) als Schrauben-, Elastomer- oder Spiralfeder oder als Tellerfederpaket ausgebildet ist.

2. Druckspeicher nach Anspruch 1, **dadurch gekennzeichnet, daß**
- der einen Teil der Wandung des Gehäuses (10) bildende Teil der Federanordnung (30a) zumindest abschnittsweise durch einen Faltenbalg, vorzugsweise aus Metall gebildet ist.

3. Druckspeicher, nach einem der Ansprüche 1 oder 2, **dadurch gekennzeichnet, daß**
- parallel zu der durch einen Teil der Wandung des Gehäuses (10) gebildeten Federanordnung (30a) ein weiterer Teil der Federanordnung (30b) wirkt.

4. Druckspeicher nach Anspruch 3, **dadurch gekennzeichnet, daß** der weitere Teil der Federanordnung (30b) im Inneren des Gehäuses angeordnet ist.

## Claims

1. Pressure accumulator comprising:
- a housing (10) for receiving fluid,
- a fluid connection (12) for fluid flowing into or out of the housing (10), as well as
- a spring arrangement (30a, 30b), against whose force fluid flowing through the fluid connection (12) acts, wherein
- a part of the spring arrangement (30a) is formed by at least a part of the wall of the housing (10),
**characterized in that** the other part of the spring arrangement (30b) is designed as coil, elastomer or spiral spring or as Belleville spring washer packet.

2. Pressure accumulator according to claim 1, **characterized in that**
- the part of the spring arrangement (30a) forming a part of the wall of the housing (10) is at least sectionally formed by a bellows preferably of metal.

3. Pressure, accumulator according, to one of the claims 1 or 2, **characterized in that**
- a further part of the spring arrangement (30b) acts parallel to the spring arrangement (30a) formed by a part of the wall of the housing (10).

4. Pressure accumulator according to claim 3, **characterized in that** the further part of the spring arrangement (30b) is arranged in the interior of the housing.

## Revendications

1. Accumulateur avec
- un carter (10) destiné à recevoir un fluide,
- un branchement (12) pour un fluide entrant et sortant du carter (10) ainsi que
- un agencement à ressorts (30a, 30b) contre la force duquel travaille le fluide entrant par le branchement (12),
- une partie de l'agencement à ressorts (30a) étant formée par au moins une partie de la paroi du carter (10),
**caractérisé en ce que** l'autre partie de l'agencement à ressorts (30b) est conçue sous la forme d'un ressort cylindrique, d'un ressort élastomère ou d'un ressort en spirale ou sous la forme d'un paquet de ressorts à disques.

2. Accumulateur selon la revendication 1, **caractérisé en ce que**
- la partie de l'agencement à ressorts (30a) formant une partie, de la paroi du carter (10) est formée au moins sur un tronçon par un soufflet constitué de préférence en métal.

3. , Accumulateur selon l'une des revendications 1 ou 2, **caractérisé en ce que**
- une autre partie de l'agencement à ressorts (30b) agit parallèlement à l'agencement à ressorts (30a) formé par une partie de la paroi du carter (10).

4. Accumulateur selon la revendication 3 **caractérisé en ce que** l'autre partie de l'agencement à ressorts (30b) est disposée à l'intérieur du carter.
